Europäisches Patentamt

European Patent Office

Office européen des brevets

(11) Veröffentlichungsnummer: **0 040 695**
B1

(12) # EUROPÄISCHE PATENTSCHRIFT

(45) Veröffentlichungstag der Patentschrift:
25.05.83

(51) Int. Cl.³: **B 29 F 1/06**

(21) Anmeldenummer: **81102937.0**

(22) Anmeldetag: **16.04.81**

(54) **Rückströmsperre für Schnecken-Spritzgiessmaschinen.**

(30) Priorität: **24.05.80 DE 3019974**

(43) Veröffentlichungstag der Anmeldung:
**02.12.81 Patentblatt 81/48**

(45) Bekanntmachung des Hinweises auf die Patenterteilung:
**25.05.83 Patentblatt 83/21**

(84) Benannte Vertragsstaaten:
**AT CH FR GB IT LI NL**

(56) Entgegenhaltungen:
**CH-A-357 608**
**DE-A-1 921 058**

(73) Patentinhaber: **MANNESMANN DEMAG KUNSTSTOFFTECHNIK ZWEIGNIEDERLASSUNG DER MANNESMANN DEMAG AKTIENGESELLSCHAFT, Rennweg 37, D-8500 Nürnberg (DE)**

(72) Erfinder: **Schirmer, Karl, Laurentiusstrasse 12c, D-8500 Nürnberg (DE)**
Erfinder: **Stuis, Georg, Nötteleinweg 16, D-8500 Nürnberg (DE)**

(74) Vertreter: **LOUIS, PÖHLAU, LOHRENTZ & SEGETH, Ferdinand-Maria-Strasse 6, D-8130 Starnberg (DE)**

### Rückströmsperre für Schnecken-Spritzgießmaschinen

Die Erfindung betrifft eine Rückströmsperre am Schneckenkopf von Schneckenspritzgießmaschinen, mit einem auf dem Schneckenkopf zwischen einer vorderen und einer hinteren Endlage frei verschiebbaren Druckring, der mit seinem Außenumfang abdichtend an der Zylinderinnenwand geführt ist, an seinem Innenumfang zum Schaft des Schneckenkopfes hin einen Durchlaß für die zu verspritzende Masse, z. B. plastifiziertes Kunststoffmaterial, freiläßt und der in seiner hinteren Endlage auf einem Dichtsitz aufsitzt und eine Rückströmung von Masse in die Schneckengänge sperrt.

Rückströmsperren der vorstehend geschilderten Art sind in vielfältiger Ausführung bekannt (DE-A-1 921 058, CH-A-355 608). Dabei werden die beiden Endlagen des Druckringes durch Anschläge bestimmt, an denen der Druckring jeweils zur Anlage gelangt. Das Funktionsprinzip dieser Rückströmsperren beruht darauf, daß der Druckring während der Phase, in der die Masse durch die Schnecke nach vorne in den Sammelraum gefördert wird, zum vorderen Anschlag hin gedrückt wird, so daß er von dem rückwärtigen Dichtsitz abgehoben ist. Die Masse kann somit durch den Durchlaß hindurchtreten. Während dieser Förderphase wirkt auf den Druckring sowohl die Reibkraft infolge des gleichzeitigen Rücklaufes der Schnecke, die Druckkraft aufgrund der Druckdifferenz zwischen der vorderen und hintern Stirnfläche des Druckringes und die Drossel- oder Scherkraft der geförderten Masse im Durchfluß. Durch diese gemeinsam wirkenden Kräfte kann der Druckring in der Förderphase der Schnecke an den vorderen Anschlag angedrückt werden. Da er aufgrund der Reibung an der Zylinderinnenwand nicht rotiert, kann der vordere Anschlag an ihm reiben. Beim Spritzhub wird der Druckring durch die in entgegengesetzter Richtung in den Durchlaß einströmende Masse bis zum Anschlag an den rückwärtigen Dichtsitz verschoben, so daß dort eine Abdichtung erfolgt und ein Rückströmen der im Sammelraum des Spritzzylinders befindlichen Masse in die Schneckengänge verhindert wird.

Aufgrund der Gleitreibung zwischen dem Anschlag und der vorderen Druckringstirnfläche verschleißt der Druckring, so daß dieser ausgetauscht werden muß. Es gibt bereits eine Reihe von Vorschlägen, um den am Druckring bzw. am Schneckenkopf auftretenden Verschleiß aufgrund dieser Reibung herabzusetzen. So ist es bekannt, die Radialarme, die zwischen sich Durchlässe bilden, um in der Förderphase die geförderte Masse in den Sammelraum eintreten zu lassen, an ihrer rückwärtigen Gleitfläche mit Hartmetall zu belegen. Ein anderer Vorschlag besteht darin, die Reibung an diesen Radialarmen dadurch herabzusetzen, daß die eigentliche Gleitfläche in Umfangsrichtung ununterbrochen durchgehend ausgebildet wird, so daß die Durchlässe zwischen den Radialarmen die Form von allseits umschlossenen Kanälen haben. Bisher wurden jedoch durch diese Lösungen nur Teilerfolge erzielt. Auch ist die Herstellung der zwischen den Radialarmen befindlichen Durchlässe für die Masse verhältnismäßig aufwendig, so daß die Herstellungskosten des Schneckenkopfes hoch sind.

Der Erfindung liegt die Aufgabe zugrunde, eine Rückströmsperre der eingangs geschilderten Art zu schaffen, bei der der geschilderte Verschleiß an dem vorderen Anschlag des Druckringes bzw. an der daran zur Anlage kommenden Druckringstirnfläche völlig vermieden werden kann. Außerdem soll die Rückströmsperre so beschaffen sein, daß sie strömungsbehindernde Drosselwirkungen im Bereich von Durchströmöffnungen für die Masse am Schneckenkopf nicht zur Folge hat.

Erfindungsgemäß wird dies dadurch erreicht, daß der Schaft des Schneckenkopfes in dem Durchlaß ein die Masse durch den Durchlaß nach vorne förderndes Förderelement trägt.

Der Erfindung liegt die Erkenntnis zugrunde, daß es zur Verhinderung eines Gleitkontaktes zwischen dem vorderen Anschlag und der zugehörigen Stirnfläche des Druckringes in dessen vorderer Endlage des Aufbaues einer den eingangs geschilderten Kräften entgegenwirkenden Kraft bedarf, durch die der Druckring überhaupt daran gehindert ist, an dem vorderen Anschlag zur Anlage zu gelangen. Eine derartige Gegenkraft wird nach der Erfindung dadurch erzeugt, daß entgegen der bisherigen Praxis die Spritzmasse aufgrund der Förderwirkung der Schnecke nicht passiv durch den Durchlaß zwischen dem Schaft des Schneckenkopfes und dem Innenumfang des Druckringes gefördert wird, sondern aktiv durch ein in diesem Durchlaß angeordnetes Förderelement. Während nämlich in dem ersteren bisher praktizierten Fall sich aufgrund der eingangs erwähnten Drossel- und Scherspannung in der Spritzmasse ein Staudruck auf der Rückseite des Druckringes aufbaut, der diesen — zusammen mit den weiteren genannten Kräften — an den vorderen Anschlag andrückt, wird durch die aktive Förderung der Masse durch den Durchlaß hindurch umgekehrt ein Druckaufbau vor der vorderen Stirnfläche des Druckringes bewirkt, so daß das Druckgefälle über der Länge des Druckringes entgegengesetzt zu den bekannten Konstruktionen verläuft. Infolge des von der Schneckenspitze her in der Spritzmasse aufgebauten, gegenüber der Rückseite des Druckringes höheren Druckes wird auch in der Förderphase der Schnecke der Druckring nach hinten gedrückt, so daß er völlig frei von der dem vorderen Anschlag liegt.

Der Druckaufbau auf der Vorderseite des Druckringes, d. h. die Förderhöhe des im Durchlaß angeordneten Förderelements läßt sich so bestimmen, daß man in Verbindung mit der Ringfläche, die von der vorderen Stirnfläche des Druckringes gebildet wird, eine nach hinten wirkende Druckkraft erhält, die den Druckring gerade in einem bestimmten Abstand von dem vorderen Anschlag hält. Dieser Abstand stellt sich aufgrund der Strömungsverhältnisse der Masse ein und ist im wesentlichen abhängig von dem wirkenden Druckgefälle, dem Durchsatz und der Viskosität der Masse.

Der Durchsatz an Masse durch den Durchlaß wird sowohl durch die Förderwirkung des Förderelements als auch durch den Strömungsquerschnitt bestimmt, der von dem Durchlaß geboten wird. Wenn beispielsweise das Förderelement die radiale Höhe des Durchlasses weitgehend ausfüllt, so ist es zweckmäßig, die Förderkennwerte des Förderelements und der Schnecke gleich zu wählen, damit ein kontinuierlicher Fluß an Masse besteht. Eine exakte Abstimmung der Förderkennwerte zwischen dem Förderelement und der Schnecke ist hingegen dann nicht notwendig, wenn nach einer zweckmäßigen Ausgestaltung die radiale Höhe des Förderelements kleiner als die radiale Höhe des Durchlasses ist. Denn dann steht ein Teil des Durchlaßquerschnittes für eine »passive« Förderung der Masse zur Verfügung, die teilweise durch das Förderelement, teilweise aber durch die Schnecke selbst übernommen wird.

Mit besonderem Vorteil wird als Förderelement ein Sacknutentorpedo oder eine Förderschnecke gewählt. Auch eine Kombination dieser beiden Förderelemente ist denkbar. Der Sacknutentorpedo ist ein von Extruderschnekken her bekanntes Element, das als Pumpe für viskose Medien entwickelt wurde (vgl. »Industrie-Anzeiger« 83, (1972) 94, S. 2092 bis 2096). Der Sacknutentorpedo weist in axialer Richtung verlaufende Nuten auf, die abwechselnd an einem Ende verschlossen sind. Die Masse tritt in eine der nach hinten offenen Axialnuten ein, wird in Umfangsrichtung umgelenkt und gelangt über einen Überströmsteg zu der benachbarten Axialnut, die nach vorne hin offen ist. Der Druckaufbau in der Masse erfolgt hauptsächlich im Bereich des Massefilmes, der sich über der nach vorne verschlossenen Axialnut und über dem Überströmsteg ausbildet.

Die Förderung mittels einer Förderschnecke braucht hier nicht näher erläutert zu werden. Die geometrische Auslegung der Schnecke zur Erzielung einer bestimmten Förderwirkung (Druckaufbau und Durchsatz) ist einschlägig bekannt.

Da bei der erfindungsgemäßen Ausbildung der Rückströmsperre ein Gleitkontakt in der vorderen Endlage des Druckringes zu dem vorderen Anschlag hin nicht mehr stattfindet, kann auch naturgemäß kein Reibverschluß mehr auftreten. Eine weitere vorteilhafte Folge ist diejenige, daß an dem vorderen Ende des Schneckenkopfes, an der Schneckenspitze, keine axialen Durchlässe für die Spritzmasse mehr vorgesehen werden müssen. Vielmehr ist es möglich, an dem Schneckenkopf eine ununterbrochen umlaufende Schulter vorzusehen, die zusammen mit der vorderen Stirnfläche des Druckringes den Durchlaßspalt bestimmt, der sich aufgrund der strömungsdynamischen Verhältnisse während der Förderphase der Schnecke selbsttätig einstellt. Dieser Wegfall von Drosselwiderstände erzeugenden Durchbrüchen oder Radialarmen ist insbesondere für thermoplastische Massen und dort wiederum für empfindliche Massen wie z. B. Hart-PVC von ,wesentlicher Bedeutung, da diese Massen im allgemeinen scherempfindlich sind.

Weitere Vorteile der vorliegenden Erfindung ergeben sich aus der nachfolgenden Beschreibung bevorzugter Ausführungsbeispiele anhand der beiliegenden Zeichnungen sowie aus weiteren Unteransprüchen. In den Zeichnungen zeigt

Fig. 1 einen Längsschnitt durch den Spritzzylinder einer Schneckenspritzgießmaschine im Bereich des Schneckenkopfes mit einer Rückströmsperre, die als Förderelement einen Sacknutentorpedo aufweist;

Fig. 2 einen Querschnitt längs der Linie II-II in Fig. 1;

Fig. 3 eine erfindungsgemäße Rückströmsperre, bei der als Förderelement im Durchlaß eine Förderschnecke vorgesehen ist, und

Fig. 4 bis 6 Längsschnitte in Aufsicht und Seitenansicht sowie ein Querschnitt längs der Linie VI-VI durch die Rückströmsperre mit einer besonderen Ausführung des Sacknutentorpedos als Förderelement.

In den Zeichnungen sind nur die sich unmittelbar auf die Erfindung beziehenden Bestandteile einer Schneckenspritzgießmaschine dargestellt. Die Schneckenspritzgießmaschine hat im übrigen einen herkömmlichen Aufbau, der an dieser Stelle nicht näher erläutert zu werden braucht.

In einem Spritzzylinder 1 ist eine Schnecke 2 drehbar und axial verschiebbar gelagert und geführt. Das vordere Ende der Schnecke weist eine Gewindebohrung 3 auf, in die ein als gesondertes Bauteil ausgebildeter Schneckenkopf, der im Ganzen mit 4 bezeichnet ist, einschließlich einer Rückströmsperre 5 einschraubbar ist. Der Schneckenkopf 5 besitzt einen gegenüber dem Schaftdurchmesser der Schnecke 2 deutlich abgesetzten Schaft 6, an den sich vorne eine Schulter 7 anschließt, die in Umfangsrichtung ununterbrochen und glatt durchläuft. Ausgehend von der Schulter 7 nach vorne bildet dann der Schneckenkopf 4 eine konisch zulaufende Schneckenspitze 8.

Auf dem Schneckenkopf 4, den Schaft 6 umgebend, sitzt ein Druckring 9 der Rückströmsperre 5, der mit seiner zylindrischen Außenfläche an der Innenwand des Spritzzylinders 1 abgedichtet, jedoch gleitend geführt ist und dessen Innendurchmesser so bemessen ist, daß er einen Durchlaß 10 zum Schaft 6 hin bildet. Die hintere Stirnfläche 11 des Druckringes 9 verläuft vom Außenrand her zunächst senkrecht zur Längsachse des Druckringes 9, ist jedoch dann zu einem konischen Ventilsitz 12 eingezogen, der mit einem komplementär konisch dazu gestalteten Dichtsitz 13 am vorderen Ende der Schnecke 2 zusammenwirken kann.

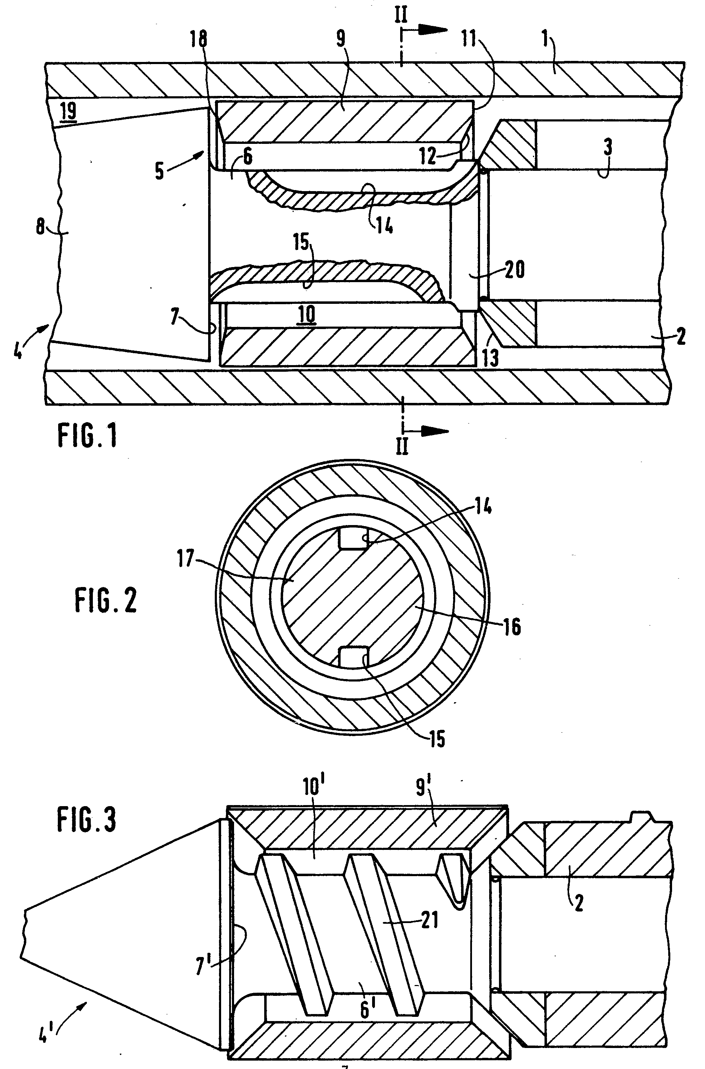

Der Schaft 6 des Schneckenkopfes 4 ist nun bei dem Ausführungsbeispiel gemäß Fig. 1 als Sacknutentorpedo mit den Sacknuten 14 und 15 gestaltet. Der Durchlaß 10 hat somit in Umfangsrichtung nicht eine konstante radiale Höhe, sondern eine veränderliche, die im Bereich der Sacknuten 14, 15 sich — im gezeigten Ausführungsbeispiel — auf etwa das Doppelte erhöht: Zwischen den Sacknuten 14 und 15 befinden sich Überströmstege 16, 17. Die Sacknut 14 ist zu der Schnecke 2 hin geöffnet, so daß von der Schnecke aus Masse in diese einfließen kann, jedoch zur Schneckenspitze 8 hin verschlossen. Eine Masseströmung ist daher nur — je nach Drehrichtung der Schnecke 2 — über einen der Überströmstege 16 oder 17 zur Sacknut 15 hin möglich, die nach hinten verschlossen, jedoch zur Schneckenspitze 8 hin axial geöffnet ist. In dem Teil des Durchlasses 10, der jeweils im Bereich der Überströmstege 16, 17 liegt, baut sich ein beträchtlicher Druck aufgrund einer Schleppströmung auf, so daß die Masse aus der nach vorne offenen Sacknut 15 mit einem höheren Druck austritt, als sie von der Schnecke 2 her in die nach hinten offene Sacknut 14 eintritt. Der Sacknutentorpedo wirkt somit als ein Förderelement, durch das die Masse aktiv durch den Durchlaß 10 hindurch gefördert wird und zu dem vor der Schneckenspitze 8 liegenden Sammelraum — nicht dargestellt — gelangt. Aufgrund der aktiven Strömung stellt sich, wie aus Fig. 1 ersichtlich ist, zwischen der Schulter 7 und der vorderen Stirnfläche 18 des Druckringes 9 ein Abstand ein, der im wesentlichen durch den Durchsatz an Masse in der Zeiteinheit, den in der Masse herrschenden Druck und die Viskosität der Masse bestimmt ist. Die Masse umströmt dann die von der Schulter gebildete Kante und fließt in axialer Richtung durch einen sich konisch erweiternden Durchlaßspalt 19 zum Sammelraum.

Der Übergang von dem vorderen Ende der Schnecke 2 zu dem Sacknutentorpedo ist durch einen Bund 20 des Schaftes 6 gebildet, dessen Außenfläche etwa achsparallel verläuft, dann jedoch gerundet in die Überströmstege 16 und 17 übergeht. Die Enden der Sacknuten 14 und 15 sind ebenfalls strömungsgünstig gerundet, um eine gleichmäßige Umlenkung der Masseströmung zu erreichen.

Die Förderwirkung des Sacknutentorpedos in Verbindung mit der Ringfläche der vorderen Stirnfläche 18 des Druckringes 9 bestimmt den Druckaufbau in der Masse, der zu dem erwünschten Druckgefälle zwischen den Stirnflächen 18 und 11 des Druckringes 9 führt und den Druckring 9 in Richtung auf den hinteren Dichtsitz 13 etwas von der Schulter 7 abhebt.

Die Ausführungsform gemäß Fig. 3 unterscheidet sich von der vorstehend beschriebenen lediglich dadurch, daß an die Stelle des Sacknutentorpedos 14, 15 eine Förderschnecke 21 getreten ist, die unmittelbar in den Schaft 6' des Schneckenkopfes 4' eingearbeitet ist. Die Förderschnecke 21 beginnt und endet jeweils in einem bestimmten Abstand von dem nur angedeuteten vorderen Schneckenende bzw. von der Schulter 7'. Die Höhe der Schneckenbunde beträgt etwa 80% der Gesamthöhe des Durchlasses 10'.

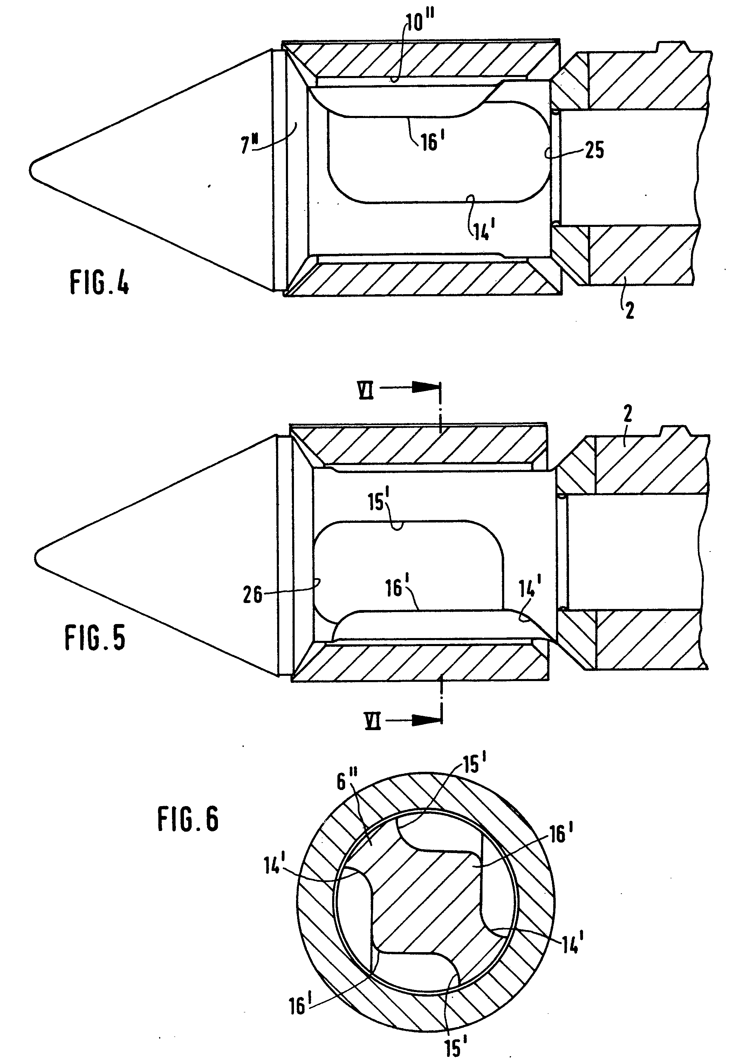

Die Ausführungsform gemäß den Fig. 4 bis 6 weist als Förderelement eine besondere Gestaltung eines Sacknutentorpedos auf. Dieser Sacknutentorpedo besitzt zwei Sacknutenpaare 14', 15', die einander diametral gegenüber liegen, d. h. jeweils die Nuten 14' und die Nuten 15' sind gegeneinander um 180° auf den Umfang des Schneckenschaftes versetzt angeordnet. Wie schon bei dem Ausführungsbeispiel gemäß den Fig. 1 und 2 ist jeweils die Sacknut 14' zur Schnecke 2 hin geöffnet, während jede Sacknut 15' nur zur Schneckenkopfspitze offen ist. Je ein Sacknutenpaar 14', 15' weist einen zwischen den beiden Sacknuten liegenden Überströmsteg 16' auf, der infolge der um 90° auf dem Umfang des Schneckenschaftes zueinander versetzten Anordnung der Sacknut 14' bzw. 15' jedes Sacknutenpaares durch eine gerundete Kante an der Verschneidung der beiden Sacknuten gebildet ist. Der Überströmsteg 16' weist eine Höhe von etwa 40% der gesamten radialen Höhe des Durchlaßspaltes 10'' auf, gemessen von Grund der Sacknuten 14' bzw. 15'. Im übrigen erstreckt sich jedoch der Schaft 6'' des Schneckenkopfes nahezu über die ganze Radialhöhe des Durchlasses 10'', so daß ein Materialfluß ausschließlich im Bereich der Sacknutenpaare erfolgt.

Wie sich aus den Ansichten gemäß den Fig. 4 und 5 ergibt, ist die Eintrittsöffnung 25 der zur Schnecke 2 hin geöffneten Sacknut 14' ebenso wie die Austrittsöffnung 26 der zur Schneckenkopfspitze hin offenen Sacknut 15' in Umfangsrichtung kleiner als die sich daran anschließend erweiternde Nutenbreite. Der Übergang von den Sacknutenöffnungen 25, 26 zu der vollen Nutenbreite ist gerundet, wie sich aus den Fig. 4 und 5 erkennen läßt.

Während bei den Ausführungsbeispielen gemäß den Fig. 1 bis 3 die Schulter 7 bzw. 7' senkrecht zur Schneckenachse steht, bildet die Schulter 7'' bei dem Ausführungsbeispiel gemäß den Fig. 4 bis 6 einen Konus, der glatt in das strömungsgünstig gerundete Nutenende der jeweiligen Sacknut 15' übergeht (Fig. 6).

Gegenüber den vorstehend beschriebenen Ausführungsbeispielen sind Änderungen im Rahmen der Erfindung denkbar. So ist es möglich, anstelle der einstückigen Ausbildung des Förderelements mit dem Schaft 6 das Förderelement gesondert herzustellen und mit dem Schaft 6 des Schneckenkopfes in beliebiger Weise zu verbinden. Außerdem versteht sich, daß die radiale Höhe des Förderelements, z. B. der Überströmstege beim Sacknutentorpedo oder der Schneckenbunde bei der Förderschnecke unterschiedlich ausgeführt werden kann. Dabei ist zu berücksichtigen, daß mit abnehmender radialer Höhe des Förderelements gegenüber dem Durchlaß die Förderwirkung des Förderelements geringer wird, jedoch der Durchsatz steigt.

Weiterhin kann auch daran gedacht werden, sowohl die Gangtiefe der Schnecke 21 als auch die Tiefe der Sacknuten 14, 15 über die Länge des Durchlasses 10' bzw. 10 veränderlich zu machen. Weiterhin ist der Sacknutentorpedo gemäß Fig. 1 mit nur zwei Sacknuten 14, 15 ersetzbar durch eine größere Anzahl von Sacknuten mit entsprechend schmäleren Überströmstegen. Auch kann von dem im Ausführungsbeispiel gezeigten Rechteckquerschnitt der Sacknuten 14, 15 zugunsten anderer Querschnittsformen abgewichen werden.

Die vorstehend erläuterte Rückströmsperre nach der Erfindung ist auch mit Vorteil kombinierbar mit einem Rückschlagventil nach einem älteren Vorschlag der Anmelderin EP-A1-0 027 616, da das Rückschlagventil in der Förderphase der Schnecke an die Schulter 7 angedrückt wird.

Schließlich ist zwar die in den Ausführungsbeispielen gezeigte glatte und in Umfangsrichtung durchlaufende Schulter 7 bzw. 7' und die daran anschließende Schneckenspitze für günstige Strömungsverhältnisse von besonderem Vorteil, jedoch ist prinzipiell auch eine Ausbildung der Schneckenspitze 8 mit den im Stand der Technik bekannten axialen Durchbrüchen möglich, da aufgrund der geschilderten Funktion der Rückströmsperre auch in einem solchen Fall Verschleißerscheinungen an dem Druckring 9 nicht zu befürchten sind.

## Patentansprüche

1. Rückströmsperre (5) am Schneckenkopf von Schneckenspritzgießmaschinen, mit einem auf dem Schneckenkopf zwischen einer vorderen und einer hinteren Endlage frei verschiebbaren Druckring (9, 9'), der mit seinem Außenumfang abdichtend an der Zylinderinnenwand geführt ist, an seinem Innenumfang zum Schaft (6, 6') des Schneckenkopfes hin einen Durchlaß (10, 10') für die zu verspritzende Masse, z. B. plastifiziertes Kunststoffmaterial, freiläßt und der in seiner hinteren Endlage auf einem Dichtsitz (12, 13) aufsitzt und eine Rückströmung von Masse in die Schneckengänge sperrt, dadurch gekennzeichnet, daß der Schaft (6, 6') des Schneckenkopfes (4, 4') in dem Durchlaß (10, 10') ein die Masse durch den Durchlaß (10, 10') nach vorne förderndes Förderelement (14, 15; 21) trägt.

2. Rückströmsperre nach Anspruch 1, dadurch gekennzeichnet, daß als Förderelement auf dem Schaft (6) ein Sacknutentorpedo (14, 15, 14', 15') angeordnet oder ausgebildet ist.

3. Rückströmsperre nach Anspruch 1, dadurch gekennzeichnet, daß als Förderelement auf dem Schaft (6') Schneckengänge (21) angeordnet oder ausgebildet sind.

4. Rückströmsperre nach einem der Ansprüche 1 bis 3, dadurch gekennzeichnet, daß die radiale Höhe des Förderelements in dem Durchlaß (10, 10') annähernd gleich oder kleiner bis herab zur Hälfte der radialen Höhe des Durchlasses (10, 10') ist.

5. Rückströmsperre nach einem der Ansprüche 1 bis 4, dadurch gekennzeichnet, daß die radiale Höhe des Förderelements über die Länge des Durchlasses (10, 10') konstant ist.

6. Rückströmsperre nach einem der Ansprüche 1 bis 5, dadurch gekennzeichnet, daß die vordere Stirnfläche (18) des Druckringes (9, 9') zum Innenumfang hin konisch eingezogen ist.

7. Rückströmsperre nach einem der Ansprüche 1 bis 6, dadurch gekennzeichnet, daß die vordere Endlage des Druckringes (9, 9') durch eine ununterbrochen umlaufende Schulter (7, 7') des Schneckenkopfes (4, 4') definiert ist, die mit der Zylinderinnenwand (1) einen Durchlaßspalt (19) für die Masse bildet.

8. Rückströmsperre nach Anspruch 7, dadurch gekennzeichnet, daß der Übergang vom Schaft (6, 6') zu der Schulter (7, 7') strömungsgünstig gerundet ist.

9. Rückströmsperre nach einem der Ansprüche 1 bis 8, dadurch gekennzeichnet, daß der Schneckenkopf (4, 4') ein gesondertes, an der Schnecke (2) befestigbares Bauteil ist.

## Claims

1. A backflow barrier (5) at the screw head of screw injection moulding machines, comprising a pressure ring (9, 9') which is freely displaceable on the screw head between front and rear limit positions and which is sealingly guided with its outer periphery at the inside wall surface of the cylinder and which leaves free at its inner periphery relative to the shank portion (6, 6') of the screw head a gap (10, 10') for the material to be injected, for example plasticised synthetic resin and which, in its rear limit position, seats on a sealing seat (12, 13) and blocks backflow of material into the screw pitches, characterised in that, in the gap (10, 10'), the shank portion (6, 6') of the screw head (4, 4') carries a conveyor element (14, 15; 21) for conveying the material forwardly through the gap (10, 10').

2. A backflow barrier according to claim 1 characterised in that a blind-groove torpedo (14, 15, 14', 15') is arranged or formed on the shank portion (6) as the conveyor element.

3. A backflow barrier according to claim 1 characterised in that screw pitches (21) are arranged or formed on the shank portion (6') as the conveyor element.

4. A backflow barrier according to one of claims 1 to 3 characterised in that the radial height of the conveyor element in the gap (10, 10') is approximately equal to or smaller than, down to half, the radial height of the gap (10, 10).

5. A backflow barrier according to one of claims 1 to 4 characterised in that the radial height of the conveyor element is constant over the length of the gap (10, 10').

6. A backflow barrier according to one of claims 1 to 5 characterised in that the front end surface (18) of the pressure ring (9, 9') is tapered inwardly towards the inner periphery.

7. A backflow barrier according to one of claims 1 to 6 characterised in that the front limit position of the pressure ring (9, 9') is defined by an uninterrupted peripheral shoulder (7, 7') on the screw head (4, 4'), which, with the inside wall surface (1), forms a through-flow gap (19) for the material.

8. A backflow barrier according to claim 7 characterised in that the transition from the shank portion (6, 6') to the shoulder (7, 7') is rounded to facilitate flow of material.

9. A backflow barrier according to one of claims 1 to 8 characterised in that the screw head (4, 4') is a separate component which can be secured to the screw (2).

### Revendications

1. Barrage anti-reflux (3) prévu sur la tête de vis de chines à mouler par injection à vis et comprenant une bague de pression (9, 9') librement déplaçable sur la tête de vis entre une position finale avant et une position finale arrière, guid d'une manière étanche sur la paroi intérieure du cylindre par périphérie extérieure, laissant subsister, sur sa périphérie térieure, vers la tige (6, 6') de la tête de vis, une voie de passage (10, 10') pour la masse à mouler par injection, par exemple, une matière synthétique plastifiée, s'appliquant sur un siège étanche (12, 13) dans sa position finale arrière et empêchant un reflux de la masse dans filets de la vis, caractérisé en ce que la tige (6, 6') de la tête de vis (4, 4') soutient, dans voie de passage (10, 10'), un élément de transport (14, 15; 21) acheminant la masse vers l'avant par la voie de passage (10, 10').

2. Barrage anti-reflux selon la revendication 1, caractérisé en ce qu'une torpille à rainures borgnes (14, 15, 14', 15') est disposée ou réalisée comme un élément de transport sur la tige (6).

3. Barrage anti-reflux selon la revendication 1, caractérisé en ce que des filets de vis (21) sont disposés ou réalisés come un élément de transport sur la tige (6').

4. Barrage anti-reflux selon l'une quelconque des revendications 1 à 3, caractérisé en ce que la hauteur radiale de l'éléme de transport dans la voie de passage (10, 10') est approximativement égale ou plus petite jusqu'à la moitié de la hauteur radial de la voie de passage (10, 10').

5. Barrage anti-reflux selon l'une quelconque des revendications 1 à 4, caractérisé en ce que la hauteur radiale de l'éléme de transport est constante sur la longueur de la voie de passage (10, 10').

6. Barrage anti-reflux selon l'une quelconque des revendications 1 à 5, caractérisé en ce que en ce que la surface frontale avant (18) de la bague de pression (9, 9') rentre coniquement par rapport à la périphérie intérieure.

7. Barrage anti-reflux selon l'une quelconque des revendications 1 à 6, caractérisé en ce que la position finale avant de la bague de pression (9, 9') est définie par un épaulement (7, 7') circulaire ininterrompu de la tête de vis (4, 4'), lequel forme, avec la paroi intérieure du cylindre (1), une fente de passage (19) pour la masse.

8. Barrage anti-reflux selon la revendication 7, caractérisé en ce que la transition de la tige (6, 6') à l'épaulement (7, 7') est arrondie pour favoriser l'écoulement.

9. Barrage anti-reflux selon l'une quelconque des revendications 1 à 8, caractérisé en ce que la tête de vis (4, 4') est une pièce de construction séparée, à même d'être fixée sur la vi (2).

FIG.1

FIG.2

FIG.3

FIG.4

FIG.5

FIG.6

9